# EUROPEAN PATENT SPECIFICATION

(11) **EP 0 607 429 B1**
(45) Date of publication and mention of the grant of the patent: **22.01.1997**
(21) Application number: 90916098.8
(22) Date of filing: 05.11.1990
(51) Int. Cl.: H02K 17/02, H02K 17/16

(54) **INDUCTION MOTOR OF THE OUTER ROTOR-TYPE**
INDUKTIONSMOTOR DER AUSSENLÄUFERBAUART
MOTEUR A INDUCTION DU TYPE A INDUIT EXTERNE

(30) Priority: 06.11.1989 JP 287515/89
(43) Date of publication of application: 27.07.1994
(73) Proprietor: KABUSHIKI KAISHA SHIKOKU SOGO KENKYUJO, Kagawa 761-91 (JP); SATO, Kazunobu, Myozaigun Tokushima 779-32 (JP)
(72) Inventor: SATO, Kazunobu, Myozai-gun Tokushima 779-32 (JP); HIGASA, Hiromasa, Kagawa 760 (JP)
(74) Representative: Ilgart, Jean-Christophe
(86) International application number: JP9001435
(87) International publication number: WO9107004

(56) References cited:
- FR-A- 1 285 808
- JP-A- 5 184 008
- US-A- 3 514 648
- US-A- 3 596 121

## Description

### [BACKGROUND OF THE INVENTION]

### 1.Field of the Invention

The present invention relates to an induction motor, more particularly an induction motor of the outer rotor-type in which rotor windings are arranged on the outer side of the stator winding.

### 2.Description of the Prior Art

Electric motors are widely used as a power unit for industrial machinery and traffic systems. A rotatable rotor of the motor is generally installed inside the motor and a stationary stator is arranged outside the rotator. Accordingly, many other parts must be additionally installed in the motor to transmit the output of the motor to the machine.

There is recently used a motor with a permanent magnet having a rotor arranged on the outer side of a stator in order to simplify a transmission mechanism for imparting the output from the motor to the machine. In applying this adapted motor to industrial machinery or traffic systems, iron powder easily adheres to the surface of the machine, and the adhesion to the transmission means often impairs durability of the machine.

Furthermore, since an electric motor for industrial machinery or traffic systems is installed under various temperature conditions, the magnetic intensity of the permanent magnet, which is easily affected by temperature, is liable to be changed owing to the fixing of the magnet on the outer surface of the motor. It is, therefore, difficult for the motor to output a constant driving torque especially at a high temperature.

An induction motor according to the invention is constituted as follows and according to claim 1.

Prior art patents, such as US-A-3,596,121, US-A-3,514,648 and FR-A-1,285,808 disclose motors with an inner stator and an outer rotor.

A rotor frame with a rotor winding is rotatably supported by a stator frame with a stator winding. The stator frame is provided with a hub, a stator winding is mounted on the outer periphery of the hub via a yoke, a rotary shaft is rotatably supported by a hole in the hub, the rotor frame is held at the outer end of the rotary shaft, and a rotor winding possessed by the rotor frame is arranged on the side of the outer periphery of the stator winding. According to the invention, the constitution of the rotor arranged on the side of the outer periphery of the stator permits the outer periphery of the rotor to be used as an output transmission means to the machine, and accordingly the transmission mechanism can be simplified. And since a permanent magnet is not installed on the rotor arranged on the outer side of the motor, the magnet intensity on the outer side of the motor is small, and adhesion of iron powder is reduced and durability of the machine is not impaired. Further, owing to no permanent magnet on the motor, a driving torque is seldom affected by temperature, and the motor can be installed under any temperature condition.

### [BRIEF DESCRIPTION OF THE DRAWINGS]

Fig. 1 is a sectional view of an induction motor of the outer-type according to the invention. Fig. 2 is a perspective view of a rotor according to the invention.

Fig. 3 is a perspective view of a squirrel-cage rotor according to the invention.

Figs. 4 and 5 show the application of an induction motor of the outer rotor-type to a centrifugal pump, wherein Fig. 4 is a schematic diagram of a centrifugal pump and Fig. 5 is a side sectional view thereof.

### [DETAILED DESCRIPTION]

Embodiments of the present invention will be described in greater detail hereinafter with reference to the attached drawings.

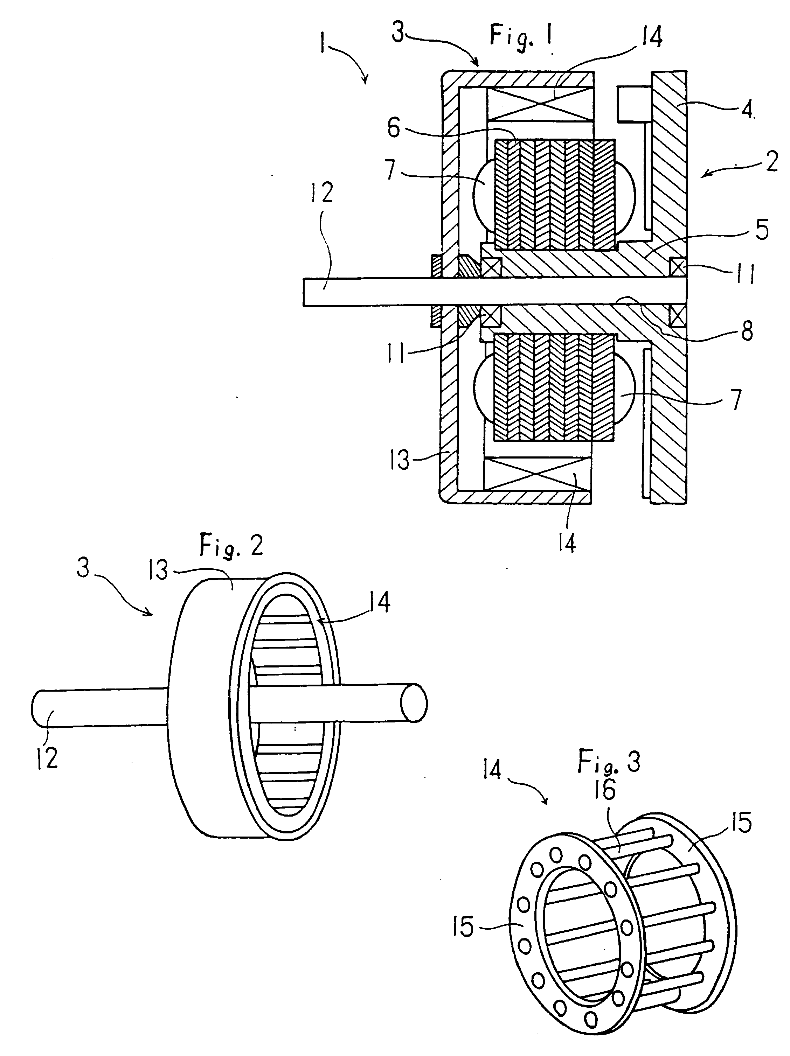

Referring now to Fig. 1, reference numerals 1, 2, 3 are an induction motor of the outer rotor-type, a stator, and a rotor, respectively. The stator 2 possesses a stator frame 4 fixed to the machine, and the stator frame 4 is provided with a hub 5 formed cantileveredly in the body of the frame 4. A yoke 6 made of many laminated steel plates is mounted on the side of the outer periphery of the hub 5, and a stator winding 7 is installed on the yoke 6.

Bearings 11 and 11 are installed in a hole 8 in the hub 5, and a rotary shaft 12 of the rotor 3 is rotatably supported by the bearings 11.

As shown perspectively in Fig. 2, the rotor 3 includes a container-like rotor frame 13 made of steel plates and a rotary shaft 12 arranged at the center of the rotor frame 13.

And a squirrel-cage rotor 14, as shown in Fig. 3, is fitted within the rotor frame 13 along the inner periphery thereof.

The squirrel-cage rotor 14 includes two end rings 15, 15 and many conductors 16 connecting both the end rings. The squirrel-cage rotor 14 served as a rotor winding generates turning force relative to the stator winding 7. An induction motor 1 is completed by installing a rotary shaft 12 in the bearings 11 additionally to the rotor 3.

Under the proper installation of the rotary shaft 12 in the bearings 11, the rotor 3 is rotated centering around the hole 8 in the hub 5 of the stator 2 by turning on the power supply because the squirrel-cage rotor 14 as a rotor winding is arranged so as to cover the outer periphery of the stator winding 7 mounted on the outer periphery of the hub 5.

Therefore, the installation of the rotor 3 outside the stator 2 in the induction motor 1 permits the outer periphery of the rotor 3 to be used as a part of a driving machine ( equivalent to a rotating part in the present invention ), and the mechanism for the output transmission can be simplified.

And further, owing to no permanent magnet in the rotor 3, adhesion of iron powder can be possibly reduced and durability of the machine is not impaired.

And furthermore, owing to no permanent magnet on the outer side of the induction motor 1, a driving torque is seldom affected by temperature and the motor can be installed under any temperature condition.

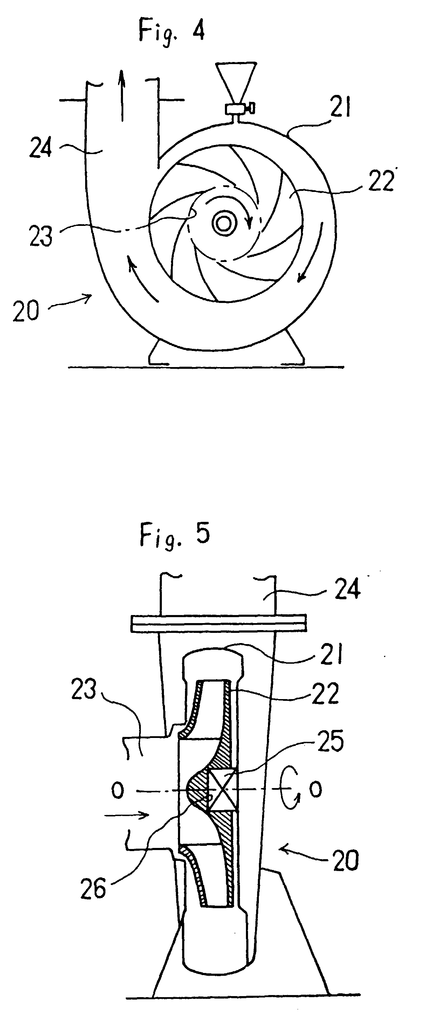

An example of the application of the induction motor 1 will be now described with reference to Figs. 4 and 5. These figures show the induction motor 1 applied to a driving motor of a centrifugal pump 20.

A liquid absorbed through a suction pipe 23 into a spiral casing 21 is accelerated by the turning of an impeller 22 in the arrow direction in Fig. 4 and it is discharged through a drain pipe 24.

A driving motor 25 for turning the impeller 22 of the centrifugal pump 20 is constituted between the spiral casing 21 and the impeller 22.

The stator 2 with the stator frame 4 of the induction motor of the outer rotor-type is installed around the rotation axis 0-0 of the impeller 22 in the spiral casing 21 and a concavity 26 for fitting the rotor frame 13 therein is formed with respect to the axis. And the impeller 22 is rotated with the rotary shaft 12 centered around the hub 5 of the stator frame 4 and it is served as a centrifugal pump 20.

In applying an induction motor of the outer rotor-type to a centrifugal pump 20, a well-known sealing structure (not shown) must be necessarily adopted in order to keep watertightness inside the motor.

When the rotor 3 is combined with the impeller 22, the squirrel-cage rotor 14 may be installed immediately inside the concavity 26 formed in the impeller 22 itself as a rotating part instead of the rotor frame 13, and accordingly the number of the constituent parts can be reduced.

And thus, the application of the induction motor of the outer rotor-type to the driving motor 25 of the centrifugal pump 20 permits of the slimming of the shape of the centrifugal pump projecting at the back of the impeller, of the shortening of the rotary shaft, of the reduction of the number of the driving parts, and of the simplification of the structure.

Even if a liquid conveyed by the centrifugal pump 20 includes magnetic material such as iron powder, adhesion of the magnetic material to the impeller and the rotating parts can be possibly reduced and the damage to the pump 20 is seldom caused thereby owing to no permanent magnet in the rotor 3 formed inside the impeller 22.

And further, even if a liquid is a high temperature, the driving torque does not come under the influence of a decline of magnet intensity owing to the installation of no permanent magnet on the outer side of the motor easily liable to become high temperature, and the motor can be installed under any temperature condition.

An induction motor of the outer rotor-type can be applied to various uses such as an electric automobile, a rolling machine, or a winding machine besides a centrifugal pump.

In the application of it to an electric automobile, a wheel rim can be used as a rotor frame, and in a rolling machine or a winding machine a rolling roller or a winding drum can be used as a rotor frame.

The simplification of the transmission mechanism and the secure durability can be also accomplished in these uses.

## Claims

1. An induction motor (1, 25) of the outer rotor type for driving a centrifugal pump which includes a rotatable impeller (22) supported by a casing (21), a suction opening (23) formed in the casing opposite to a rotation center (0-0) of the impeller, and a drain opening (24) formed in the casing in a direction of rotation of the impeller (22), wherein the motor comprises :
- a stator (2) comprising a stator frame (4) and a hub (5),
- a rotor (3) comprising a rotor winding (14) and a rotary shaft (12) provided in a rotor frame (13), the rotary shaft (12) being placed at the center of the rotor winding (14),
- and wherein the rotary shaft (12) of the rotor frame (13) is caused to pass through the hub hole (8), the hub (5) being positioned around the rotary shaft (12) and whitin the rotor windin (14),
- and the motor being characterized in that :
- the stator (2) is formed at a supporting portion of the casing (21) which rotatably supports the impeller, the hub (5) projecting toward the suction opening and having a stator winding (7) and a hub hole (8) ;
- the rotor frame (13) is fitted in a concavity (26) formed in the rotation center of the impeller, the concavity being on the side facing said supporting portion of the casing (21); and
- the rotor winding (14) is placed on the inner surface side of the concavity (26), so that the induction motor (1,25) of the outer rotor-type is placed within the concavity (26) of the impeller (22).

## Patentansprüche

1. Induktionsmotor (1,25) vom Außenrotortyp für den Antrieb einer Kreiselpumpe, welche ein von einem Gehäuse (21) gestütztes, drehbares Flügelrad (22), eine in dem Gehäuse entgegengesetzt zu einem Drehzentrum (0-0) des Flügelrades ausgebildete Ansaugöffnung (23) und eine in dem Gehäuse in einer Drehrichtung des Flügelrades (22) ausgebildete Abflußöffnung (24) enthält, welcher Motor aufweist:
- einen Stator (2) mit einem Statorrahmen (4) und einer Nabe (5),
- einem Rotor (3) mit einer Rotorwicklung (14) und einer in einem Rotorrahmen (13) vorgesehenen drehbaren Welle (12), wobei die drehbare Welle (12) in der Mitte der Rotorwicklung (14) angeordnet ist,
- und worin die drehbare Welle (12) des Rotorrahmens (13) durch das Nabenloch (8) hindurchgeht, wobei die Nabe (5) um die drehbare Welle (12) und innerhalb der Rotorwicklung (14) angeordnet ist,
welcher Motor dadurch gekennzeichnet ist, daß
- der Stator (2) an einem Stützbereich des Gehäuses (21) ausgebildet ist, welches das Flügelrad drehbar stützt, und die Nabe (5) zu der Ansaugöffnung hin vorsteht und eine Statorwicklung (7) und ein Nabenloch (8) hat;
- der Rotorrahmen (13) in eine in dem Drehzentrum des Flügelrades ausgebildete Austiefung (26) eingepaßt ist, wobei sich die Austiefung auf der Seite befindet, die dem Stützbereich des Gehäuses (21) zugewandt ist; und
- die Rotorwicklung (14) auf der Seite der inneren Oberfläche der Austiefung (26) angeordnet ist, so daß der Induktionsmotor (1,25) vom Außenrotortyp innerhalb der Austiefung (26) des Flügelrades (22) angeordnet ist.

## Revendications

1. Moteur à induction (1, 25) du type à induit externe destiné à entraîner une pompe centrifuge qui comporte une hélice rotative (22) supportée par un carter (21), une ouverture d'aspiration (23) formée dans le carter en face d'un centre de rotation (0-0) de l'hélice et une ouverture de décharge (24) formée dans le carter dans une direction de rotation de l'hélice (22), lequel moteur comprend:
- un stator (2) comprenant un corps de stator (4) et un moyeu (5),
- un induit (3) comprenant un enroulement d'induit (14) et un arbre rotatif (12) situé dans un corps d'induit (13), l'arbre rotatif (12) étant placé au centre de l'enroulement d'induit (14),
- et dans lequel l'arbre rotatif (12) du corps d'induit (13) est amené à traverser le trou de moyeu (8), le moyeu (5) étant positionné autour de l'arbre rotatif (12) et dans l'enroulement d'induit (14)
- et le moteur étant caractérisé en ce que:
- le stator (2) est formé au niveau d'une portion de support du carter (21) qui supporte d'une manière permettant la rotation l'hélice, le moyeu (5) faisant saillie vers l'ouverture d'aspiration et ayant un enroulement de stator (7) et un trou de moyeu (8) ;
- le corps d'induit (13) est ajusté dans une concavité (26) formée dans le centre de rotation de l'hélice, la concavité étant sur le côté faisant face à ladite portion de support du carter (21); et
- l'enroulement d'induit (14) est placé sur le côté de la surface interne de la concavité (26), de manière à ce que le moteur à induction (1, 25) du type à induit externe soit placé dans la concavité (26) de l'hélice (22).
